# DEMANDE DE BREVET EUROPEEN

(11) **EP 1 154 297 A1**
(43) Date de publication de la demande: **14.11.2001**
(21) Numéro de dépôt: 01401139.9
(22) Date de dépôt: 03.05.2001
(51) Int. Cl.: G02B 6/293, G02B 6/34, G02B 6/16

(54) **Compensation de la dispersion modale de polarisation d'un réseau inscrit dans une fibre optique**

(30) Priorité: 11.05.2000 FR 0006004
(71) Demandeur: ALCATEL, 75008 Paris (FR)
(72) Inventeur: Berthelot, Laurent, 91400 Orsay (FR); Riant, Isabelle, 91400 Orsay (FR); Sansonetti, Pierre, 91120 Palaiseau (FR)
(74) Mandataire: Lamoureux, Bernard

(57) **Abrégé**

L'invention concerne la dispersion modale de polarisation; l'inscription des variations d'indice dans un réseau inscrit dans une fibre optique génère une dispersion modale de polarisation. L'invention propose de compenser cette dispersion modale de polarisation par une courbure mécanique de la fibre.

L'invention permet par un procédé simple de compenser efficacement la dispersion modale de polarisation, et d'améliorer les performances d'un réseau inscrit dans une fibre; elle s'applique notamment aux réseaux de Bragg.

## Description

La présente invention concerne les réseaux inscrits dans les fibres optiques, tels que les réseaux de Bragg, et plus spécifiquement la dispersion modale de polarisation de tels réseaux.

L'inscription de réseaux dans des fibres repose sur les variations d'indice qui peuvent être induites dans la fibre par une exposition à une lumière ultraviolette. L'exposition d'une fibre optique convenablement dopée à une lumière ultraviolette permet de créer à intervalles plus ou moins réguliers des zones dans lesquelles l'indice varie. On appelle réseau inscrit un composant optique, qui présente un indice variant le long de la fibre.

La biréfringence d'une fibre est définie comme la différence d'indice entre deux axes principaux de polarisation, dans le cas le plus simple d'une fibre monomode présentant une section asymétrique dans laquelle se propagent deux modes polarisés linéairement, suivant des directions orthogonales. On appelle axe de la biréfringence linéaire la direction de polarisation suivant laquelle l'indice est le plus important. D. N. Payne et autres, Development of Low- and High-birefringence Optical Fiber, IEEE Journal of Quantum Electronics, vol. QE-18 no. 4 (1982), pages 477-487 fournit une définition de la biréfringence, et discute les différents paramètres qui affectent la biréfringence d'une fibre optique; il est précisé que la courbure, la pression, les rotations de la fibre, les champs magnétiques et la température ont une influence sur la biréfringence.

La dispersion modale de polarisation est représentative de la dispersion d'une fibre ou d'un composant inscrit dans une fibre en fonction des axes de polarisation de la fibre; elle est définie comme l'amplitude de variation du temps de groupe lors d'une variation de la polarisation de la lumière incidente sur tous les états de polarisation possibles. Cette quantité est directement reliée aux axes de polarisation dans la fibre. Au moins dans le cas d'une biréfringence linéaire, il existe une relation entre la biréfringence et la dispersion modale de polarisation, qui est donnée dans I. Riant et autres, Polarization mode dispersion analysis in fibre chromatic dispersion compensators, OFC'99, TuS2-1 p269, dans le cas d'une fibre, ou dans le cas d'un réseau inscrit dans une fibre. On utilise dans la suite de la description une formulation en termes de biréfringence, ou en termes de dispersion modale de polarisation.

La biréfringence d'un réseau inscrit ou la dispersion modale de polarisation de ce réseau pose problème, dans la mesure où elle rend les propriétés du réseau - notamment la réflectivité du réseau - dépendante de la polarisation. Ce problème est particulièrement gênant pour les applications de transmission à haut débit (au dessus de 10 Gbit/s par canal).

A.M. Vengsarkar et autres, Birefringence reduction in side-written photoinduced fiber devices by a dual exposure method, Optics Letters, vol. 19 no. 16 (1994), pages 1260-1262 soulève le problème de l'augmentation de la biréfringence lors de l'inscription latérale de réseaux ("gratings" en langue anglaise) à l'aide d'une lumière ultraviolette. Cet article explique que l'asymétrie de l'inscription latérale est une des causes de l'augmentation de la biréfringence. Pour réduire la biréfringence, il est proposé d'utiliser une technique d'exposition double, ou d'exposition simultanée des deux côtés d'une fibre cylindrique.

T. Erdogan et V. Mizrahi, Characterisation of UV-induced birefringence in photosensitive Ge-doped silica optical fibers, J. Opt. Soc. Am. B, vol. 11 no. 10 (1994), pages 2100-2105 propose une explication de l'augmentation de la biréfringence dans les réseaux inscrits dans une fibre. Ce document montre que l'utilisation pour l'inscription du réseau d'une lumière ultraviolette polarisée le long de l'axe de propagation de la fibre fait diminuer la biréfringence. Cette solution présente l'inconvénient de faire diminuer la photosensiblité, et donc la modulation maximale de l'indice dans le réseau.

L'article précité de I. Riant et autres discute l'influence de la dispersion modale de polarisation de la fibre de départ sur la dispersion modale de polarisation d'un réseau obtenu par photo-inscription. Ce document suggère d'utiliser une fibre présentant une faible biréfringence pour l'inscription de réseaux, de sorte à limiter la dispersion modale de polarisation du réseau obtenu. Cette solution induit toutefois une limite sur les fibres qui peuvent être utilisées pour l'inscription d'un réseau.

L'invention concerne le problème de la biréfringence dans les réseaux inscrits dans une fibre optique. Elle propose une solution simple, qui s'applique indépendamment du type de fibre utilisé pour l'inscription du réseau. Elle permet de procéder à une inscription en utilisant les différents procédés connus, avec ou sans double exposition.

Plus précisément, l'invention propose une fibre optique à réseau inscrit caractérisée par le fait qu'elle présente une courbure dans un plan sensiblement perpendiculaire à l'axe de la biréfringence induite par l'inscription du réseau.

Dans un mode de réalisation préféré, l'angle entre ledit plan et l'axe de la biréfringence induite par l'inscription du réseau est compris entre 65° et 115°.

De préférence, la courbure s'étend au moins dans la zone où le réseau est inscrit.

Dans un mode de réalisation, la courbure est constante, et présente une valeur comprise entre 5 et 10 m⁻¹.

Le réseau inscrit est avantageusement un réseau de Bragg.

L'invention concerne également un composant optique comprenant une fibre optique à réseau inscrit, caractérisé en ce que ladite fibre présente une courbure dans un plan sensiblement perpendiculaire à l'axe de la biréfringence induite par l'inscription du réseau.

L'invention propose aussi un compensateur de dispersion chromatique, comprenant au moins fibre telle que ci-dessus.

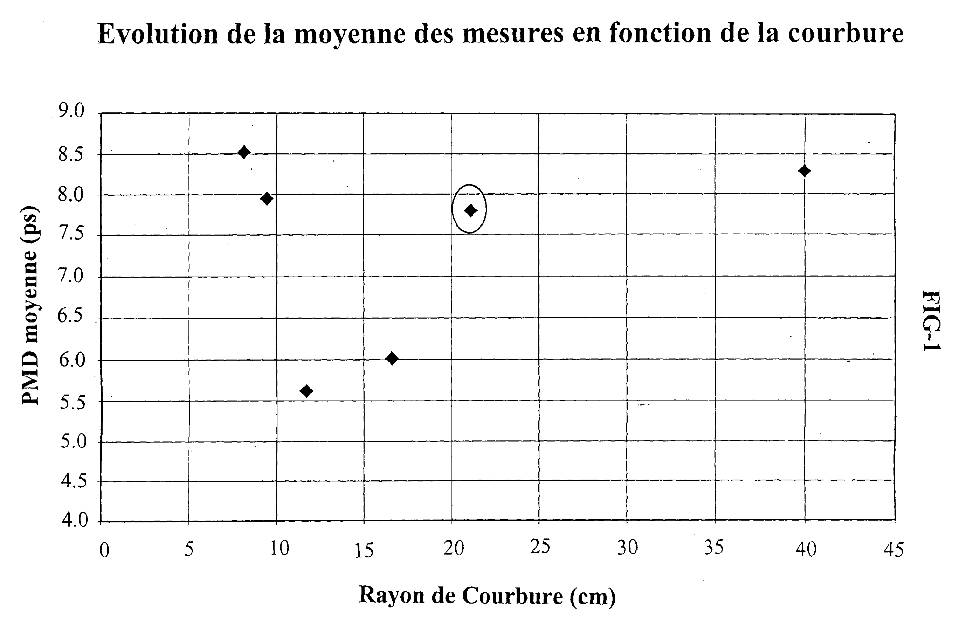

D'autres caractéristiques et avantages de l'invention apparaîtront à la lecture de la description qui suit de modes de réalisation de l'invention, donnés à titre d'exemple et en référence au dessin annexé, dont la figure unique montre la dispersion modale de polarisation mesurée en fonction du rayon de courbure de la fibre.

L'invention propose, pour réduire la dispersion modale de polarisation d'un réseau inscrit dans une fibre, de courber la fibre de manière à induire dans la fibre une dispersion modale de polarisation qui compense les effets de la dispersion modale de polarisation induite par l'inscription du réseau. Plus précisément, la courbure de la fibre induit une biréfringence linéaire, suivant l'axe de la fibre défini par le plan de courbure; cette biréfringence est une fonction décroissante de la courbure de la fibre.

Dans un réseau inscrit suivant les procédés classique d'irradiation par une lumière ultraviolette, la biréfringence est aussi linéaire, suivant un axe qui est fonction de l'irradiation. Pour une irradiation latérale de la fibre d'un seul côté, l'axe de la biréfringence correspond à la direction d'irradiation. Pour une irradiation des deux côtés de la fibre, l'axe de la biréfringence correspond aussi à la direction d'irradiation.

L'invention propose de courber la fibre dans un plan qui est sensiblement perpendiculaire à l'axe de la biréfringence induite dans la fibre par l'inscription du réseau. Cet axe peut être repéré sur la fibre lors de l'inscription du réseau; il peut aussi être déterminé expérimentalement en mesurant la biréfringence lorsque la fibre n'est pas courbée.

La courbure imposée à la fibre induit une biréfringence qui compense la biréfringence induite par l'inscription du réseau. De fait, l'inscription du réseau tend à faire augmenter l'indice suivant un premier axe de polarisation, par rapport à l'indice du deuxième axe de polarisation; du fait de l'angle entre le plan et ce premier axe de polarisation, la courbure tend au contraire à faire augmenter l'indice suivant le deuxième axe de polarisation, par rapport au premier axe de polarisation. Il est donc préférable que le plan de courbure forme avec l'axe de la biréfringence un angle aussi proche que possible de 90°. Cet angle est en pratique compris entre 65° et 115°.

Le rayon de courbure imposé à la fibre dépend de la biréfringence induite par l'inscription du réseau. Le rayon de courbure peut être déterminé expérimentalement, comme expliqué en référence à la figure.

La figure montre un graphe de la dispersion modale de polarisation mesurée sur une fibre, en fonction du rayon de courbure de la fibre. On a considéré dans l'exemple de la figure une fibre optique monomode à saut d'indice dopée dans le coeur au germanium, dans laquelle est inscrit un réseau par irradiation latérale à l'aide d'une lumière ultraviolette. Le réseau est inscrit avec un masque de phase chirpé de pas central de 1066,97nm et de chirp 0.154 nm/cm, sur une longueur de 50mm, avec une variation d'indice uniforme d'environ 10⁻⁴. On appelle "chirp" dans ce contexte une variation du pas du réseau le long de la fibre. La dispersion modale de polarisation mesurée sur le réseau avec une fibre droite est de 8.7ps. La fibre est ensuite courbée, dans un plan perpendiculaire à l'axe de la biréfringence induite par l'inscription du réseau, avec des rayons de courbure variables.

Est portée en ordonnée la dispersion modale de polarisation totale mesurée sur la fibre courbée, en ps. Cette biréfringence résulte d'une part de l'inscription du réseau, et d'autre part de la courbure appliquée à la fibre. Est porté en abscisse le rayon de courbure appliqué à la fibre, en cm; comme celui-ci varie, la dispersion modale de polarisation totale de la fibre varie. Dans l'exemple de la figure, le rayon de courbure varie entre 8 et 40 cm. La figure montre que la dispersion modale de polarisation, pour des faibles rayons de courbure, est supérieure à 8 ps; pour des rayons supérieures à 40 cm, la dispersion modale de polarisation totale dans la fibre est voisine de la dispersion modale de polarisation induite par l'inscription du réseau.

Lorsque le rayon de courbure diminue, la dispersion modale de polarisation induite par la courbure augmente, et contrebalance la dispersion modale de polarisation induite par l'inscription du réseau. La dispersion modale de polarisation totale de la fibre diminue; elle atteint dans l'exemple une valeur minimale voisine de 5,5 ps pour un rayon de courbure de l'ordre de 12 cm.

Lorsque le rayon de courbure diminue encore, la dispersion modale de polarisation induite par la courbure augmente encore, et dépasse la dispersion modale de polarisation induite par l'inscription du réseau. La dispersion modale de polarisation totale de la fibre augmente de nouveau. L'axe de la biréfringence dans la fibre est alors perpendiculaire à l'axe de la biréfringence dans la fibre droite.

Les valeurs de rayons de courbure appliquées selon l'invention peuvent être déterminées expérimentalement, comme expliqué en référence à la figure, en faisant varier le rayon et en mesurant la biréfringence. Les rayons dépendent de la biréfringence du réseau. De préférence, le rayon de courbure appliqué à la fibre est compris entre 10 et 20 cm; ces valeurs correspondent à une plage de courbure de 5 à 10 m⁻¹. La limite inférieure de cette plage correspond à une biréfringence induite par la courbure supérieure à la biréfringence induite par l'inscription du réseau; dans ce cas, la biréfringence totale de la fibre est suivant le même axe que la biréfringence induite par la courbure de la fibre. La limite supérieure de la plage correspond à une biréfringence induite par la courbure inférieure à la biréfringence induite par l'inscription du réseau; dans ce cas, la biréfringence totale de la fibre est suivant le même axe que la biréfringence induite par l'inscription du réseau.

On peut utiliser pour mettre en oeuvre l'invention tout dispositif mécanique permettant de courber la fibre et de la maintenir dans une position donnée, et dans un plan donné. Un réceptacle approprié peut être constitué par une bobine ou un arc de bobine autour de laquelle la fibre est enroulée, au voisinage du réseau inscrit. La fibre de l'invention présente de préférence une courbure dans la zone où le réseau est inscrit. La courbure peut être appliquée en dehors de cette zone; de fait, une biréfringence dans la fibre avant ou après le réseau peut aussi permettre de compenser la biréfringence induite par l'inscription du réseau. Il est toutefois préférable pour limiter la quantité de fibre autour du réseau d'appliquer la courbure sur le réseau lui-même. En outre, ceci présente l'avantage d'éviter toute dérive de la biréfringence entre d'une part le réseau, et d'autre part l'endroit où est appliquée la courbure.

L'invention s'applique à tous les types de réseaux inscrits, et notamment aux réseaux de Bragg; elle s'applique aussi aux réseaux présentant un "chirp", c'est-à-dire une variation du pas du réseau le long du réseau, ou une apodisation, c'est-à-dire une variation de la modulation d'indice le long du réseau, ou les deux ensemble. Elle permet de diminuer la biréfringence dans de tels réseaux. L'invention s'applique notamment aux réseaux utilisés comme compensateurs de dispersion chromatique, qui doivent présenter une faible biréfringence.

Bien entendu, la présente invention n'est pas limitée aux exemples et modes de réalisation décrits et représentés, mais elle est susceptible de nombreuses variantes accessibles à l'homme de l'art. On peut utiliser des modèles numériques pour calculer la courbure à appliquer au réseau. On peut aussi appliquer une courbure qui n'est pas constante, par exemple en enroulant la fibre autour d'une surface elliptique, ou en huit. On peut dans un tel cas mesurer la biréfringence comme expliqué en référence à la figure.

## Revendications

1. Une fibre optique à réseau inscrit **caractérisée par le fait qu'**elle présente une courbure dans un plan sensiblement perpendiculaire à l'axe de la biréfringence induite par l'inscription du réseau.

2. La fibre optique de la revendication 1, **caractérisée en ce que** l'angle entre ledit plan et l'axe de la biréfringence induite par l'inscription du réseau est compris entre 65° et 115°.

3. La fibre optique de la revendication 1 ou 2, **caractérisée en ce que** la courbure s'étend au moins dans la zone où le réseau est inscrit.

4. La fibre optique de l'une des revendications 1, 2 ou 3, **caractérisée en ce que** la courbure est constante, et présente une valeur comprise entre 5 et 10 m⁻¹.

5. La fibre optique de l'une des revendications 1 à 4, **caractérisée en ce que** le réseau inscrit est un réseau de Bragg.

6. Composant optique comprenant une fibre optique selon l'une des revendications 1 à 5.

7. Un compensateur de dispersion chromatique, comprenant au moins une fibre selon l'une des revendications 1 à 5.
